Europäisches Patentamt

European Patent Office

Office européen des brevets

(19)

(11) EP 0 695 414 B1

(12) FASCICULE DE BREVET EUROPEEN

(45) Date de publication et mention
de la délivrance du brevet:
**04.11.1998 Bulletin 1998/45**

(21) Numéro de dépôt: **95909836.9**

(22) Date de dépôt: **17.02.1995**

(51) Int Cl.$^6$: **G01B 11/06**

(86) Numéro de dépôt international:
**PCT/FR95/00184**

(87) Numéro de publication internationale:
**WO 95/22740 (24.08.1995 Gazette 1995/36)**

(54) **PROCEDE DE MESURE D'EPAISSEUR D'UN MATERIAU TRANSPARENT**

DICKENMESSVERFAHREN FÜR TRANSPARENTES MATERIAL

METHOD FOR MEASURING THE THICKNESS OF A TRANSPARENT MATERIAL

(84) Etats contractants désignés:
**AT BE CH DE ES FR GB IT LI LU NL SE**

(30) Priorité: **18.02.1994 FR 9401846**

(43) Date de publication de la demande:
**07.02.1996 Bulletin 1996/06**

(73) Titulaire: **SGCC**
**92230 Gennevilliers (FR)**

(72) Inventeurs:
• **ZHANG, Jingwei**
**F-92160 Antony (FR)**
• **GRENTE, Pascal**
**F-92400 Courbevoie (FR)**

(74) Mandataire: **Breton, Jean-Claude**
**SAINT-GOBAIN RECHERCHE**
**39, quai Lucien Lefranc**
**93300 Aubervilliers Cedex (FR)**

(56) Documents cités:
**FR-A- 2 069 220**          **FR-A- 2 274 022**
**FR-A- 2 435 019**          **FR-A- 2 589 578**

**Description**

L'invention concerne un procédé et un dispositif pour la mesure d'épaisseur de matériaux transparents. Plus particulièrement, mais non exclusivement, l'invention vise la mesure d'épaisseur de matériaux en verre et plus précisément encore la mesure d'épaisseur d'emballages en verre, tels que bouteilles ou flacons.

Les exigences générales de qualité requises par les clients et l'allègement des bouteilles nécessitent un contrôle très rigoureux de l'épaisseur de ces bouteilles.

Dans l'industrie verrière, il est usuel pour les mesures d'épaisseur, de se fonder sur la mesure de capacité électrique. En effet, le verre étant un matériau diélectrique, la mesure de capacité du verre à l'aide d'électrodes permet de déterminer localement l'épaisseur du verre.

Une telle technique est notamment décrite dans les brevets EP-A-0300.616 et EP-A-0363.114. Elle consiste à appliquer un capteur, sous la forme d'une électrode allongée, sur une bouteille tandis que celle-ci tourne sur elle-même.

Une telle technique présente l'inconvénient de devoir maintenir le capteur sur la paroi de la bouteille. Cela entraîne inévitablement une usure rapide du capteur, amplifiée par la rotation de la bouteille. Ce capteur peut également être totalement détruit lorsque la bouteille présente un grand défaut qui vient heurter le capteur.

Une autre technique est décrite dans le brevet français publié sous le numéro FR-A-2 129 416. Cette technique consiste à établir un champ haute fréquence électromagnétique et à mesurer la variation d'intensité de ce champ par l'introduction d'une matière diélectrique. La tension induite dans la sonde donne une indication de la variation de l'intensité du champ et est proportionnelle à l'épaisseur du matériau diélectrique.

Cette technique ne conduit cependant pas à une bonne précision des mesures d'épaisseurs. Elle est plus particulièrement utilisée pour déterminer des épaisseurs inférieures à une valeur seuil sans pour autant donner une mesure exacte.

De plus, elle nécessite également un contact avec la bouteille, ce qui peut entraîner une usure prématurée de la tête de mesure comme il a été décrit pour la technique précédente.

Ces usures prématurées ou destructions accidentelles nécessitent donc un remplacement des capteurs ou têtes de mesure fréquentes et conduisent à des coûts élevés de maintenance du système de contrôle.

De plus, chaque détérioration et/ou remplacement d'un capteur ou tête de mesure peut entraîner un recontrôle d'une série d'articles qui a été mal contrôlée et une interruption dans la production lors de l'arrêt du contrôle, qui conduit donc à une baisse des rendements. Il est connu du document FR-A-2 435 019 une technique de mesure d'épaisseur d'une pellicule mince qui consiste à irradier la pellicule mince à l'aide d'une lumière infrarouge séparée spectroscopiquement par un balayage rapide sur une gamme de longueurs d'onde prédéterminée en fonction de la nature de la pellicule de manière à créer un spectre de frange d'interférences entres les rayons réfléchis dont on détermine les points extrêmes.

Un premier but de l'invention est de trouver un procédé de mesure d'épaisseur d'un matériau transparent, notamment d'un article en verre, conduisant à une bonne précision des mesures.

Un second but est d'éviter le risque d'usure prématurée ou de destruction, des outils de mesure notamment lors du frottement des articles mesurés sur ces outils.

Un autre but de l'invention est d'adapter le procédé de mesure à la mesure d'épaisseurs d'article en mouvement continu et sur tout l'article.

Les inventeurs ont considéré un matériau transparent assimilable à un interféromètre ; la lumière attaquant perpendiculairement un tel matériau est réfléchie par les deux faces du matériau. Les deux rayons réfléchis interfèrent avec une différence de marche notée δ et qui s'exprime de la façon suivante :

$$\delta = 2\,n.e \qquad\qquad (1)$$

où n et e représentent respectivement l'indice de réfraction et l'épaisseur du matériau transparent.

Par ailleurs, les principes d'interférométrie optique, lorsque la source lumineuse est monochromatique, conduisent à un signal d'interférence reçu par le photodétecteur qui s'exprime de la façon suivante :

$$S_{int} = I_0\left(1 + K\cdot\cos\left(\frac{2\pi}{\lambda}\,\delta\right)\right) \qquad\qquad \textbf{(2)}$$

où $I_o$ et λ représentent respectivement l'intensité lumineuse et la longueur d'onde de la source monochromatique et K désigne le contraste d'interférence.

Par détermination de la différence de marche, il est alors aisé de déterminer l'épaisseur du matériau transparent. Cependant, il apparaît une limite pour l'application de cette méthode liée à la périodicité du signal d'interférence en fonction de la différence de marche. En effet, la différence de marche étant déterminée à partir de mesure de phase, il y a un problème d'ambiguïté. Pour déterminer la différence de marche, il faut une phase inférieure à $\pi$ et donc une différence de marche inférieure à la moitié de la longueur d'onde. Cela se traduit par des mesures d'épaisseurs très précises mais limitées à des matériaux dont l'épaisseur est inférieure au micron.

Cet inconvénient lié à la limite d'une telle technique de mesure est résolu selon l'invention qui propose un procédé de mesure d'épaisseur d'un matériau transparent ou semi-transparent consistant à émettre un faisceau lumineux à fréquence optique modulée puis à réceptionner deux faisceaux ou rayons lumineux, avantageusement parallèles, renvoyés par chacune des surfaces d'une paroi du matériau, à créer une interférence entre eux et à déterminer la différence de marche du signal d'interférence.

La différence de marche est avantageusement déduite du nombre de battements du signal d'interférence par période de modulation.

Le faisceau lumineux est avantageusement issu d'une diode laser. Dans le cas d'un matériau à surfaces parallèles, on utilise un faisceau parallèle et dans le cas de matériau à faces non parallèles, le faisceau est avantageusement focalisé sur la paroi du matériau.

Le procédé de mesure est ainsi adapté pour la mesure de substrats transparents dont l'épaisseur est de préférence supérieure à 0,1 millimètre.

En effet, le procédé permet ainsi de mesurer l'épaisseur dudit substrat en ignorant l'épaisseur d'un film ou d'une couche superficielle telle que celle d'un lubrifiant déposé sur la surface d'une bouteille. On évite ainsi tout risque de perturbation.

Avantageusement, on module la fréquence optique du faisceau émis en modulant le courant d'alimentation de la diode laser.

De façon préférée, on crée une modulation linéaire de la fréquence optique du faisceau lumineux.

Selon ce mode préféré de l'invention, on module linéairement l'inverse de la longueur d'onde $1/\lambda$ Cela se traduit par une modulation de la fréquence optique qui s'exprime $\omega_o = c/\lambda$ où c est la célérité de la lumière. Par analogie, on parlera de $1/\lambda$ comme de la fréquence optique. Celle-ci lors d'une modulation linéaire se traduit par la relation :

$$\frac{1}{\lambda} = \frac{1}{\lambda_0} + \frac{\Delta\lambda}{\lambda_0^2} \cdot \frac{t}{T} \tag{3}$$

où $\Delta\lambda$ et T représentent respectivement la variation de la longueur d'onde sans saut de mode et la période de la modulation. t désigne le temps.

A un instant t de la détection, le détecteur reçoit simultanément deux rayons issus de deux faces du verre.

Ces deux rayons ayant un retard de temps l'un par rapport à l'autre du fait de la différence de marche existant entre eux, ils possèdent des fréquences optiques différentes.

Le signal d'interférence s'exprime alors de la façon suivante :

$$V_{int} = I_0(1 + K \cdot \cos(\varphi_0 + \omega t)) \tag{4}$$

$$\varphi_0 = \frac{2\pi}{\lambda_0}\delta \tag{5}$$

$$\omega = 2\pi\left(\frac{\Delta\lambda}{\lambda_0^2}\right) \cdot \frac{\delta}{T} \tag{6}$$

où $I_o$ et $\lambda o$ représentent respectivement l'intensité lumineuse et la longueur d'onde de la source monochromatique en absence de modulation et $\delta$ est la différence de marche. K désigne le contraste d'interférence.

L'expression (4) montre qu'une modulation linéaire de la fréquence optique de la source lumineuse entraîne un signal d'interférence cosinusoïdal dont la pulsation est $\omega . \omega/2\pi$ est la différence de fréquence optique de deux rayons qui interfèrent. Dans ce cas, la détection est à la fois cohérente et hétérodyne : elle est cohérente puisque le signal utile est le terme d'interférence de deux rayons ; elle est aussi hétérodyne car ce qu'on détecte est une différence de fréquence optique de ces deux rayons.

Dans une variante, l'invention propose une modulation sinusoïdale de la fréquence optique du faisceau lumineux.

Le nombre de battements N pendant une période de modulation T correspond au rapport de la pulsation $\omega$ sur la pulsation de modulation et s'exprime donc :

$$N = \frac{\Delta\lambda}{\lambda_0^2} \cdot \delta \qquad (7)$$

Ce rapport et la détermination du nombre de battements N conduisent à la différence de marche par la relation (7) et à l'épaisseur du matériau "e" par la relation (1).

Cette méthode permet donc de déterminer l'épaisseur "e" d'un matériau transparent et conduit à une bonne précision de mesure, ce qui confirme qu'un tel matériau est assimilable à un interféromètre.

De plus, le procédé selon l'invention se basant sur l'émission d'un signal lumineux et la réception de signaux renvoyés par le matériau, peut être mis en oeuvre à l'aide d'outils d'émission et de réception installés à une distance, non nulle, du matériau. Le procédé ainsi décrit permet donc une mesure d'épaisseur "e" sans contact entre le matériau transparent et les outils de mesure et donc sans risque pour ces derniers de connaître une usure prématurée due par exemple aux frottement des articles.

Cette méthode peut notamment être appliquée à la mesure de feuille de verre qui présente deux faces parallèles. Par contre, dans d'autres applications et notamment pour la mesure d'épaisseur des emballages en verre tels que des flacons, les résultats obtenus ne sont pas toujours satisfaisants.

Il s'avère que la qualité dioptrique de la face intérieure de la paroi d'un flacon ou d'une bouteille, est mauvaise du fait des techniques de fabrication et de plus, généralement, non parallèle à la face externe. La réflexion obtenue à partir de cette face est donc aléatoire.

En vue d'adapter le procédé de mesure à ce type de matériau et notamment aux récipients en verre, l'invention propose selon un mode avantageux de capter parmi les rayons diffusés émis par chacune des faces d'une paroi deux rayons parallèles l'un à l'autre et de créer une interférence de ces rayons. Pour capter des rayons diffusés et leur interférence, il est préférable de focaliser le faisceau incident sur la paroi du récipient.

Bien qu'il soit communément admis que le verre est un matériau peu ou quasiment pas diffusant, il est apparu que cette variante de l'invention conduit à des mesures exactes avec une bonne précision.

Les rayons diffusés captés sont de préférence choisis selon une direction autre que celle du faisceau réfléchi par les surfaces de la paroi du matériau transparent.

La relation (1) associant la différence de marche à l'épaisseur est alors différente et s'exprime :

$$\delta = e\left[n\left(\frac{1}{\cos\alpha} + \frac{1}{\cos\beta}\right) - (tg\,\alpha + tg\,\beta)\sin(\Psi - I)\right] \qquad (1')$$

où :

$$\alpha = \arcsin\left(\frac{1}{n}\sin I\right)$$

$$\beta = \arcsin\left(\frac{1}{n}\sin(\Psi - I)\right)$$

et

I : angle d'incidence

$\Psi$ : angle de système, c'est-à-dire l'angle formé par le faisceau incident et les rayons diffusés mesurés.

L'épaisseur "e" du matériau transparent pourra être déterminée à partir de cette relation (1') et de la relation (7) après détermination du nombre de battements N par période de modulation. Il est important de noter que l'épaisseur reste une grandeur proportionnelle au nombre de battements.

Lors de la mesure d'épaisseur sur des bouteilles, celles-ci sont en rotation sur elles-mêmes. Il est alors apparu que cette rotation peut entraîner une variation de l'intensité lumineuse des rayons renvoyés par les surfaces de la paroi. Cette variation de l'intensité peut notamment être due à la présence de poussières ou de taches ou irrégularités du matériau sur la surface externe ou interne.

Cette variation est donc une fonction du temps.

Cette variation vient alors perturber le signal d'interférence $V_{int}$ et la détermination du nombre de battements N ou de la différence de marche $\delta$ devient délicate.

Pour y remédier, l'invention propose dans une variante d'effectuer le quotient $(V_{int}/V_{mod})$, $V_{mod}$ désignant le signal de l'intensité lumineuse des rayons issus des surfaces de la paroi du matériau transparent. Il est alors possible de déterminer la différence de marche $\delta$ du signal d'interférence $V_{int}$ notamment à partir du nombre de battements N par période de modulation.

L'invention propose également un dispositif pour la mise en oeuvre du procédé précédemment décrit.

Celui-ci comprend d'une part, une source lumineuse monochromatique à fréquence optique modulée, qui est avantageusement une diode laser associée à une lentille focalisatrice et d'autre part, des moyens de réception d'un signal d'interférence et un calculateur déterminant le nombre de battements du signal d'interférence par période de modulation.

De préférence, la diode laser est alimentée par un générateur fournissant un courant modulé linéairement.

Notamment dans le cas de la mesure de l'épaisseur d'emballages en verre qui nécessite le traitement de rayons diffusés, les moyens de réception sont une lentille et une photodiode à avalanche placée au foyer de la lentille.

De préférence encore, la source lumineuse et les moyens de réception sont logés dans un même boîtier ou capteur et lors des mesures celui-ci est positionné de sorte que le faisceau émis forme un angle avec la surface externe de l'emballage différent de 90°. De cette façon, le faisceau réfléchi par les surfaces de la paroi ne peut gêner l'interférence de deux rayons de diffusion qui présentent une intensité beaucoup plus faible.

Egalement pour améliorer le signal d'interférence, il est préférable d'utiliser une photodiode à avalanche telle que le rapport de son diamètre photosensible sur la distance focale de la lentille soit faible. Cela assure en effet un bon contraste d'interférence. Lors des essais, ce rapport était de 1/100.

D'autres détails et caractéristiques avantageux de l'invention ressortent ci-après de la description des figures et des essais réalisés conformément à l'invention.

Les figures représentent :

- figure 1, une représentation schématique d'un dispositif selon l'invention pour la mesure de l'épaisseur d'un article en verre,
- figure 2, une mesure de la modulation linéaire de l'intensité lumineuse $(V_{mod})$ en fonction du temps,
- figure 3, une mesure du signal d'interférence $(V_{int})$ en fonction du temps pour une épaisseur e = 1,67 mm,
- figure 4, une représentation du nombre de battements par période de modulation pour une épaisseur e = 1,67 mm,
- figure 5, une représentation de nombre de battements par période de modulation pour une épaisseur e = 3,85 mm,
- figure 6, le tracé du nombre de battements par période de modulation en fonction de l'épaisseur du matériau.

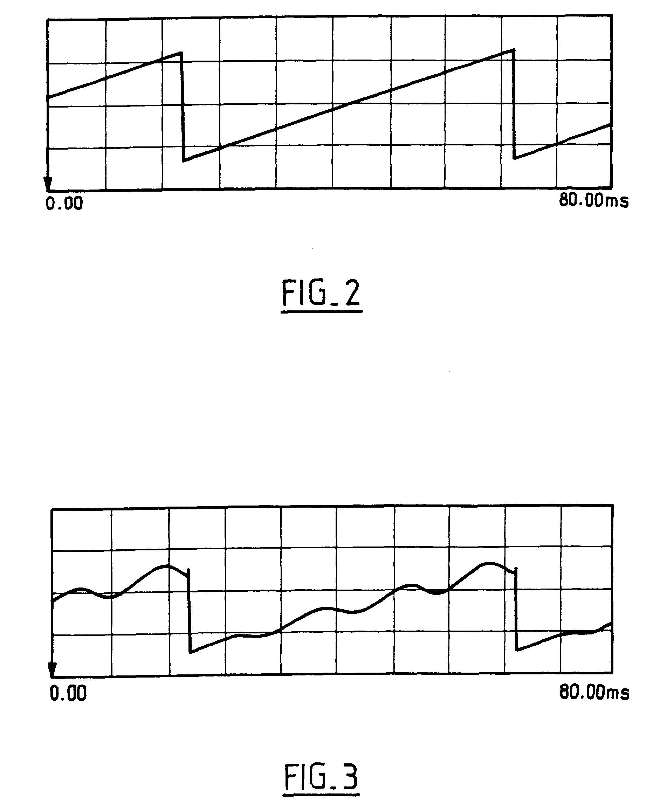

Les ordonnées des figures 2, 3, 4 et 5 sont représentées en unités arbitraires.

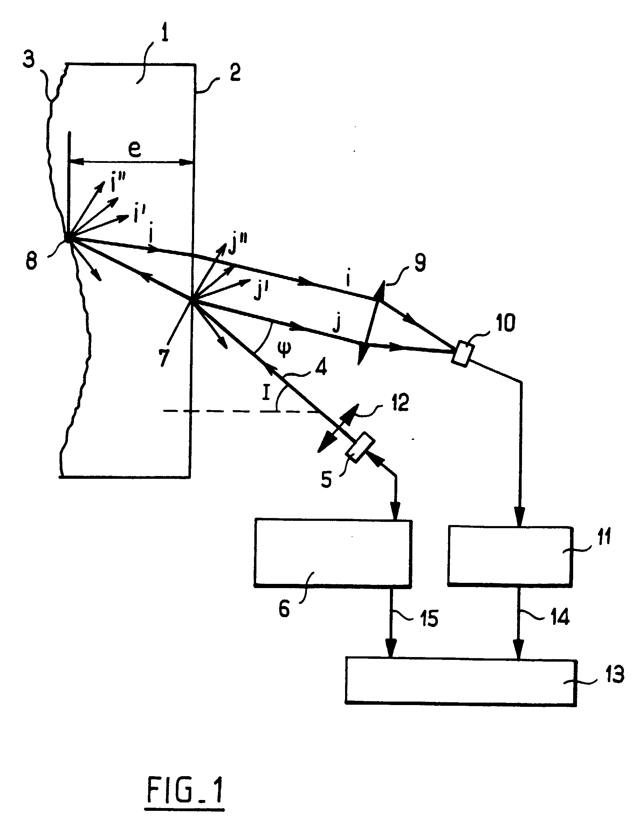

La figure 1 représente un schéma d'un dispositif selon l'invention adapté à la mesure d'épaisseur "e" de la paroi (1) d'une bouteille de verre immobile. La paroi (1) de la bouteille est schématisée de façon partielle sur cette figure. Elle comporte une surface externe (2) qui est en contact avec un moule lors de sa formation et qui présente une qualité dioptrique tout à fait satisfaisante. La surface interne (3) de la paroi, qui est en contact avec l'air soufflé lors de sa formation présente quant à elle une mauvaise qualité dioptrique. Les défauts de cette surface sont volontairement amplifiés sur cette représentation schématique pour bien mettre en évidence que la direction d'un faisceau réfléchi par cette surface est totalement aléatoire et varie en fonction du point d'impact sur cette surface.

Le faisceau (4) incident arrivant sur la paroi est émis depuis une diode laser (5) et traverse une lentille (12) qui le focalise sur la paroi (1).

La diode laser (5) utilisée dans les essais qui seront décrits ultérieurement est une diode de type monomode longitudinal et transversal. Sa puissance maximale est de 10 mW et sa longueur d'onde $\lambda_o$ = 780 nm.

La diode laser (5) est alimentée par un générateur (6) dont le courant est modulé linéairement et périodiquement. Cette modulation du courant d'alimentation permet de moduler la longueur d'onde de la diode laser et module également son intensité.

D'autres moyens permettent de ne moduler que la longueur d'onde en maintenant l'intensité constante mais sont bien plus onéreux.

Le faisceau incident (4), émis depuis la diode laser (5), est focalisé sur la paroi (1) et rencontre un premier point d'impact (7) sur la surface externe (2) et un second point (8) sur la paroi interne (3). Les flèches (i, i', i"..) et (j, j', j"..) symbolisent la diffusion du verre qui s'effectue dans toutes les directions.

Un dispositif de réception composé d'une lentille (9) et d'une photodiode à avalanche (10) est positionné de façon à recevoir un signal d'interférence de deux rayons (i, j) diffusés par chacune des surfaces (2, 3) de la paroi (1). La diffusion s'effectuant dans toutes les directions, il est toujours possible de réceptionner deux rayons (i, j) parallèles diffusés depuis les points (7) et (8). La photodiode à avalanche (10) est située à la distance focale de la lentille (9) pour recevoir le signal d'interférence $V_{int}$. Cette photodiode à avalanche (10) est associée à un amplificateur (11) pour obtenir un signal plus facilement analysable.

En effet, le verre est connu pour avoir une surface faiblement diffusante. Cependant, il s'est avéré que le traitement de rayons diffusés selon l'invention conduit à de bons résultats. Toutefois, il est souhaitable que le dispositif de réception soit placé sur une direction autre que celle du faisceau réfléchi par les faces de la paroi. Dans le cas contraire, ce faisceau, qui est bien plus intense que les rayons de diffusion, serait également reçu par la photodiode à avalanche (10) et viendrait perturber le signal d'interférence $V_{int}$.

En pratique, la diode laser et la photodiode à avalanche sont placées dans un même boîtier ou capteur. L'angle du système $\psi$ est choisi très faible environ (5°) et l'incidence est choisie différemment de la normale, de manière que la photodiode ne puisse pas être sur le parcours du faisceau réfléchi par les surfaces.

Le signal $V_{int}$ est transmis à un calculateur (13) pour effectuer l'analyse, par la liaison (14).

Le signal $V_{mod}$ représentant la variation de l'intensité lumineuse en fonction du temps est également transmis au calculateur (13) par la liaison (15).

Sur la figure 1, le signal ($V_{mod}$) est transmis depuis la diode laser par l'intermédiaire du système d'alimentation, car la bouteille de verre est immobile. En effet, la variation de l'intensité lumineuse du faisceau incident (4) est alors proportionnelle à celle des rayons diffusés (i, j). Il en serait autrement si la bouteille était animée d'un mouvement de rotation puisque comme nous l'avons vu, cette rotation entraîne une variation de l'intensité en fonction du temps.

Dans ce dernier cas, pour avoir $V_{mod}$, il est possible de mesurer l'intensité lumineuse des rayons (i, j) par exemple en intercalant un cube séparateur semi-réfléchissant sur le trajet des rayons (i, j) avant qu'ils n'atteignent la lentille (9) et en les orientant sur une autre photodiode, sans qu'il se produise une interférence de ces rayons (i, j).

Le type de signal d'interférence ($V_{int}$) obtenu avec un tel dispositif est représenté sur la figure 3. Un tel signal apparaît difficile à analyser, l'amplitude variant sur une période de modulation.

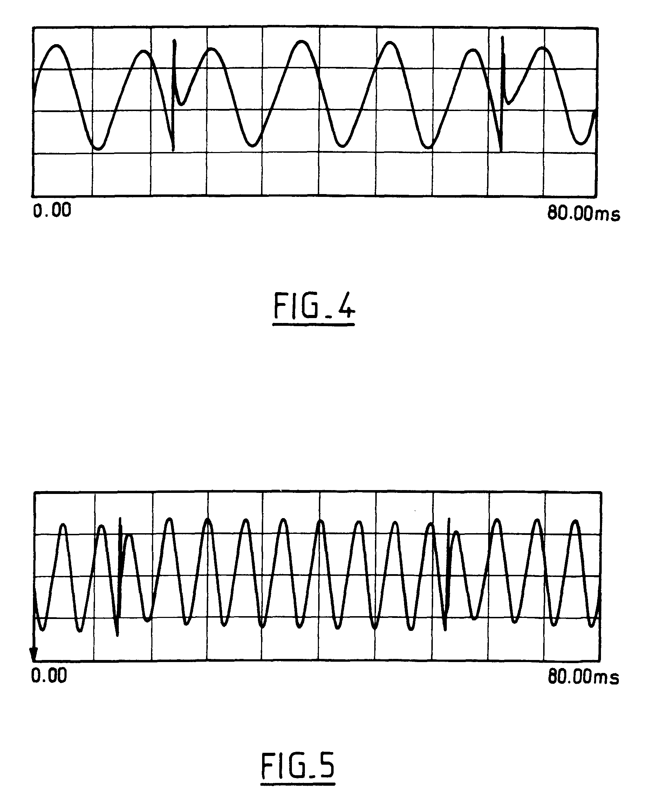

La figure 2 montre une mesure de la modulation linéaire de l'intensité ($V_{mod}$) de la diode laser. Pour permettre une analyse du signal d'interférence ($V_{int}$), il est possible d'effectuer le rapport ($V_{int}/V_{mod}$) tel que représenté sur la figure 4 à l'aide du calculateur (13). Ce signal ($V_{int}/V_{mod}$) permet de dénombrer le nombre de battements et donc l'épaisseur "e" de la bouteille de verre analysée.

Nous avons vu précédemment que l'analyse du signal ($V_{int}/V_{mod}$) permet d'éviter les perturbations dues à la variation de l'intensité lors de la rotation des bouteilles.

Or, dans le cas de la figure 1 la bouteille a été considérée comme étant immobile.

Le signal ($V_{int}/V_{mod}$) est tout de même intéressant dans ce cas car le type de modulation choisi entraîne une variation de l'intensité en fonction du temps ($V_{mod}$) et perturbe également le signal ($V_{int}$) comme le montre la figure 3.

Différents essais ont été réalisés sur des échantillons de verre d'épaisseurs connues pour valider le procédé de mesure selon l'invention.

Les figures 3 et 4 concernent un échantillon d'une épaisseur connue e = 1,67 millimètres.

La figure 5 représente le signal ($V_{int}/V_{mod}$) obtenu par la mesure sur un échantillon dont on détermine l'épaisseur e = 3,85 millimètres.

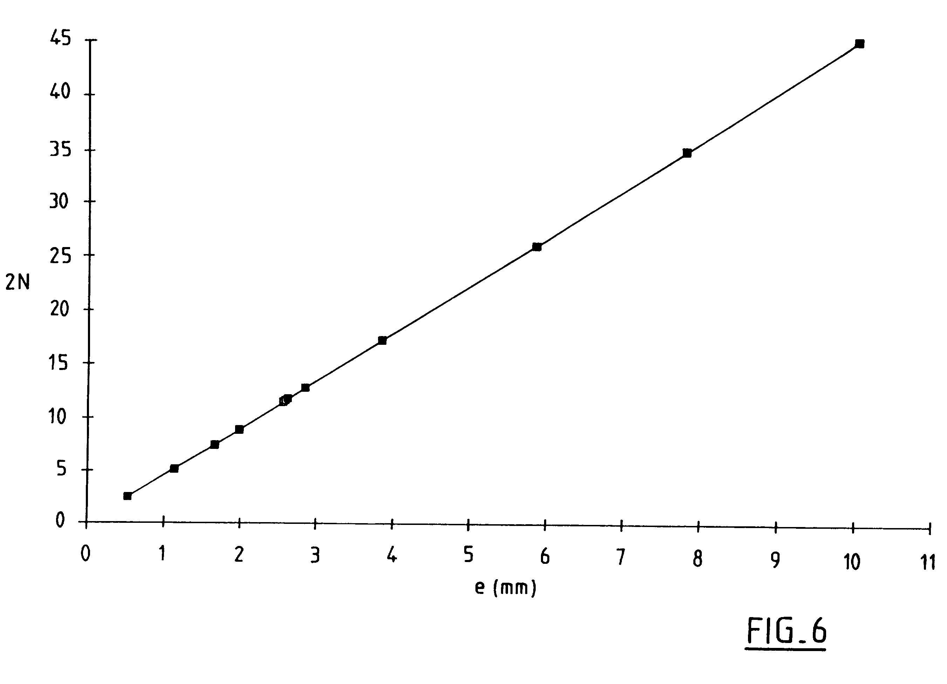

Ces deux résultats et d'autres, non présentés sous la forme des figures 4 et 5, sont représentés par la figure 6 qui est un tracé regroupant les valeurs de battements par période de modulation, mesurées sur des échantillons d'épaisseurs données.

La figure 6 montre que ce tracé forme une droite passant par l'origine. L'application des principes d'interférométrie hétérodyne se voit donc confirmer par ce tracé. En effet, la relation de proportionnalité entre le nombre de battements par période de modulation et l'épaisseur "e" du matériau mesuré est vérifiée. Cela confirme également l'assimilation des matériaux transparents, et notamment le verre, à un interféromètre.

Parmi les essais, certains ont été réalisés sur des échantillons présentant des épaisseurs très proches les unes des autres, plus exactement pour des épaisseurs variant de 20 microns (1 micron = $10^{-6}$ m). Le procédé selon l'invention a permis d'obtenir ces trois valeurs. Elles apparaissent sur la figure 6 ; il s'agit des épaisseurs 2,58 mm, 2,60 mm, 2,62 mm.

De façon à simplifier les opérations lors des mesures et éviter de déterminer les caractéristiques $\Delta\lambda$, $\lambda o$ et n, il est possible d'effectuer une mesure sur un échantillon d'épaisseur connue et d'étalonner ainsi l'appareil de mesure.

Lors du contrôle des bouteilles, il est intéressant d'effectuer des contrôles d'épaisseurs sur différentes parties de la bouteille et plus particulièrement aux niveaux du col, de l'épaule et à différentes hauteurs du corps de la bouteille.

De plus, il est préférable de réaliser ces essais sur toute la périphérie de la bouteille. Pour cela, les bouteilles défilent en continu devant plusieurs capteurs qui peuvent être disposés à différents niveaux et les bouteilles sont animées d'un mouvement de rotation sur elles-mêmes.

Le dispositif proposé permet d'effectuer une mesure par capteur dans le cas le plus exigeant toutes les 0,3 millisecondes, ce qui se traduit par une mesure tous les millimètres sur la périphérie de la bouteille pour les vitesses de défilement et de rotation habituelles sur les lignes de production de bouteilles.

Les résultats obtenus ont été satisfaisants pour des mesures effectuées sur du verre plat, des bouteilles de verre colorées ou non ainsi que sur des bouteilles en matière plastique.

## Revendications

1. Procédé de mesure de l'épaisseur e d'une paroi d'un matériau transparent d'indice de réfraction n, **caractérisé en ce qu'**il comporte les étapes suivantes :

   a) on focalise un faisceau lumineux (4) à fréquence optique modulée sur ladite paroi (1) du matériau,
   b) on réceptionne deux faisceaux ou rayons lumineux diffusés par chacune des surfaces (2, 3) de ladite paroi (1) du matériau,
   c) on crée une interférence entre eux,
   d) on détermine le nombre de battements par période de modulation du signal d'interférence,
   e) on déduit de l'étape d) la différence de marche $\delta$ entre les deux faisceaux ou rayons lumineux diffusés par chacune des surfaces (2, 3) de ladite paroi (1) du matériau, puis l'épaisseur e par la relation e = $\delta$/2n.

2. Procédé selon la revendication 1, **caractérisé en ce que** les deux faisceaux ou rayons renvoyés par chacune des surfaces sont parallèles.

3. Procédé selon l'une des revendications 1 ou 2, **caractérisé en ce que** le faisceau lumineux (4) est émis depuis une diode laser (5).

4. Procédé selon la revendication 3, **caractérisé en ce qu'**on module la fréquence optique du faisceau émis en modulant le courant d'alimentation de la diode laser (5).

5. Procédé selon l'une des revendications précédentes, **caractérisé en ce qu'**on crée une modulation linéaire de la fréquence optique du faisceau lumineux (4).

6. Procédé selon l'une des revendications 1 à 4, **caractérisé en ce qu'**on crée une modulation sinusoïdale de la fréquence optique du faisceau lumineux (4).

7. Procédé selon l'une des revendications précédentes, **caractérisé en ce que** le matériau est le verre ou le plastique, transparent, clair ou coloré.

8. Procédé selon l'une des revendications précédentes, **caractérisé en ce qu'**on effectue le rapport du signal d'interférence ($V_{int}$) sur le signal d'intensité lumineuse ($V_{mod}$) pour déterminer la différence de marche $\delta$.

9. Dispositif pour la mesure d'épaisseur d'un matériau transparent pour la mise en oeuvre du procédé selon l'une des revendications 1 à 8, **caractérisé en ce qu'**il comprend une source lumineuse (5, 6, 12) monochromatique à fréquence optique (1/$\lambda$) modulée, des moyens de réception (9, 10, 11) d'un signal d'interférence $V_{int}$ constitués d'une lentille (9) et d'une photodiode à avalanche (10), placée au foyer de la lentille et associée à un amplificateur (11) et un calculateur (13) déterminant le nombre de battements (N) du signal d'interférence $V_{int}$ par période de modulation T.

10. Dispositif selon la revendication 9, **caractérisé en ce que** la source lumineuse est une diode laser (5) associée à une lentille focalisatrice (12).

11. Dispositif selon la revendication 10, **caractérisé en ce que** la diode laser (5) est alimentée par un générateur (6) fournissant un courant modulé.

12. Dispositif selon l'une des revendications 9 à 11, **caractérisé en ce que** la photodiode à avalanche (10) est telle que le rapport du diamètre photosensible sur la distance focale de la lentille (9) soit faible.

13. Dispositif selon l'une des revendications 9 à 12, **caractérisé en ce que** la source lumineuse (5, 6, 12) et les moyens de réception (9, 10, 11) sont logés dans un même boîtier ou capteur **et en ce que** celui-ci est placé tel que le faisceau émis (4) forme un angle avec la surface externe (2) de la paroi (1) différent de 90°.

**Patentansprüche**

1. Verfahren zum Messen der Dicke d einer Wand aus einem transparenten Material mit einem Brechungsindex n, **dadurch gekennzeichnet, daß** es die Stufen

   a) Fokussieren eines Lichtbündels (4) mit modulierter optischer Frequenz auf die Wand (1) aus dem Material,

   b) Empfangen von zwei Lichtbündeln oder -strahlen, die jeweils von einer der Oberflächen (2, 3) der Wand (1) aus dem Material gestreut worden sind,

   c) Erzeugen einer Interferenz zwischen ihnen,

   d) Messen der Anzahl der Auslenkungen pro Modulationsperiode des Interferenzsignals und

   e) Berechnen der Wegdifferenz $\delta$ zwischen den zwei Lichtbündeln oder -strahlen, die jeweils von einer der Oberflächen (2, 3) der Wand (1) aus dem Material gestreut worden sind, aus Stufe d) und anschließend der Dicke d durch die Relation d = $\delta/2n$

   umfaßt.

2. Verfahren nach Anspruch 1, **dadurch gekennzeichnet, daß** die zwei jeweils von einer der Oberflächen zurückgeworfenen Lichtbündel oder -strahlen parallel sind.

3. Verfahren nach Anspruch 1 oder 2, **dadurch gekennzeichnet, daß** das Lichtbündel (4) von einer Laserdiode (5) ausgesendet wird.

4. Verfahren nach Anspruch 3, **dadurch gekennzeichnet, daß** die optische Frequenz des ausgesendeten Lichtbündels moduliert wird, indem man den Versorgungsstrom der Laserdiode (5) verändert.

5. Verfahren nach einem der vorhergehenden Ansprüche, **dadurch gekennzeichnet, daß** eine lineare Modulation der optischen Frequenz des Lichtbündels (4) erzeugt wird.

6. Verfahren nach einem der Ansprüche 1 bis 4, **dadurch gekennzeichnet, daß** eine sinusförmige Modulation der optischen Frequenz des Lichtbündels (4) erzeugt wird.

7. Verfahren nach einem der vorhergehenden Ansprüche, **dadurch gekennzeichnet, daß** das Material Glas oder Kunststoff ist, das/der transparent und klar oder eingefärbt ist.

8. Verfahren nach einem der vorhergehenden Ansprüche, **dadurch gekennzeichnet, daß** das Interferenzsignal $V_{int}$ zum Signal der Lichtintensität $V_{mod}$ ins Verhältnis gesetzt wird, um die Wegdifferenz $\delta$ zu ermitteln.

9. Vorrichtung zum Messen der Dicke eines transparenten Materials und für die Durchführung des Verfahrens nach einem der Ansprüche 1 bis 8, **dadurch gekennzeichnet, daß** sie eine monochromatische Lichtquelle (5, 6, 12) mit modulierter optischer Frequenz $(1/\lambda)$ und Mittel (9, 10, 11) für den Empfang eines Interferenzsignals $V_{int}$ umfaßt, welche aus einer Linse (9) und einer Lawinenphotodiode (10) bestehen, die im Brennpunkt der Linse angeordnet und mit einem Verstärker (11) und einem Rechner (13) verbunden ist, der die Anzahl (N) der Auslenkungen des Interferenzsignals $V_{int}$ pro Modulationsperiode T ermittelt.

10. Vorrichtung nach Anspruch 9, **dadurch gekennzeichnet, daß** die Lichtquelle eine mit einer Fokussierlinse (12) verbundene Laserdiode (5) ist.

**11.** Vorrichtung nach Anspruch 10, **dadurch gekennzeichnet, daß** die Laserdiode (5) von einer Stromquelle (6) versorgt wird, die einen modulierten Strom liefert.

**12.** Vorrichtung nach einem der Ansprüche 9 bis 11, **dadurch gekennzeichnet, daß** die Lawinenphotodiode (10) derart ist, daß das Verhältnis des lichtempfindlichen Durchmessers zur Brennweite der Linse (9) klein ist.

**13.** Vorrichtung nach einem der Ansprüche 9 bis 12, **dadurch gekennzeichnet, daß** die Lichtquelle (5, 6, 12) und die Empfangsmittel (9, 10, 11) in demselben Gehäuse oder Sensor untergebracht sind und dieses/dieser so angeordnet ist, daß das ausgesendete Lichtbündel (4) mit der Außenfläche (2) der Wand (1) einen von 90° verschiedenen Winkel bildet.

**Claims**

**1.** Process for measuring the thickness e of a wall of a transparent material having a refractive index n, characterized in that it comprises the following stages:

a) a light beam (4) at modulated optical frequency is focussed onto said wall (1) of the material,
b) two light beams or rays diffused by each of the surfaces (2, 3) of said wall (1) of the material are received,
c) an interference is created between them,
d) the number of beats per modulation period of the interference signal is determined,
e) from stage d) is deduced the path difference $\delta$ between the two light rays or beams diffused by each of the surfaces (2, 3) of said wall (1) of the material and then the thickness e by the relation $e = \delta/2n$.

**2.** Process according to claim 1, characterized in that the two rays or beams reflected by each of the surfaces are parallel.

**3.** Process according to one of the claims 1 or 2, characterized in that the light beam (4) is emitted from a laser diode (5).

**4.** Process according to claim 3, characterized in that the optical frequency of the emitted beam is modulated by modulating the supply current of the laser diode (5).

**5.** Process according to one of the preceding claims, characterized in that a linear modulation of the optical frequency of the light beam (4) is created.

**6.** Process according to one of the claims 1 to 4, characterized in that a sinusoidal modulation of the optical frequency of the light beam (4) is created.

**7.** Process according to one of the preceding claims, characterized in that the material is clear or coloured, transparent plastic or glass.

**8.** Process according to one of the preceding claims, characterized in that the ratio of the interference signal ($V_{int}$) to the light intensity signal ($V_{mod}$) is formed in order to determine the path difference $\delta$.

**9.** Device for measuring the thickness of a transparent material for performing the process according to one of the claims 1 to 8, characterized in that it comprises a monochromatic light source (5, 6, 12) at modulated optical frequency ($1/\lambda$), means (9, 10, 11) for receiving an interference signal ($V_{int}$) constituted by a lens (9) and an avalanche photodiode (10), placed at the focus of the lens and associated with an amplifier (11) and a computer (13) determining the number of beats (N) of the interference signal ($V_{int}$) per modulation period (T).

**10.** Device according to claim 9, characterized in that the light source is a laser diode (5) associated with a focussing lens (12).

**11.** Device according to claim 10, characterized in that the laser diode (5) is supplied by a generator (6) delivering a modulated current.

**12.** Device according to one of the claims 9 to 11, characterized in that the avalanche photodiode (10) is such that there is a small ratio of the photosensitive diameter to the focal distance of the lens (9).

13. Device according to one of the claims 9 to 12, characterized in that the light source (5, 6, 12) and reception means (9, 10, 11) are located in the same box or sensor and in that the latter is placed in such a way that the emitted beam (4) forms an angle with the outer surface (2) of the wall (1) which differs from 90°.

EP 0 695 414 B1

FIG_1

$$FIG.2$$

$$FIG.3$$

## FIG.4

## FIG.5

EP 0 695 414 B1

FIG.6